# EUROPEAN PATENT APPLICATION

(11) **EP 4 750 024 A1**
(43) Date of publication of application: **27.05.2026**
(21) Application number: 23948845.5
(22) Date of filing: 16.08.2023
(51) Int. Cl.: H04L 45/30

(54) **BUSINESS PROCESSING METHOD AND COMMUNICATION APPARATUS**

(71) Applicant: HUAWEI TECHNOLOGIES CO., LTD., Shenzhen 518129 (CN)
(72) Inventor: YAO, Qi, Shenzhen, Guangdong 518129 (CN); WU, Shaoyun, Shenzhen, Guangdong 518129 (CN); XING, Weijun, Shenzhen, Guangdong 518129 (CN)
(74) Representative: MERH-IP Matias Erny Reichl Hoffmann Patentanwälte PartG mbB
(86) International application number: PCT/CN2023/113304
(87) International publication number: WO 2025/035416

(57) **Abstract**

This application provides a task processing method and a communication apparatus. The method provides a solution for processing a task that requires a plurality of service functions. The method includes: A control network element determines M pieces of association information associated with one task, and sends the M pieces of association information to N service network elements, where one piece of association information is associated with one service network element. Each of first M-1 pieces of association information includes a service function list and indication information, the service function list includes at least one service function provided by a corresponding service network element for the task, the indication information indicates to send, to a subsequent service network element, data obtained by processing the task, and the last piece of association information includes only a service function list. A service function performed by each of the N service network elements and a processing sequence between the service network elements are determined, and the pieces of information are sent to the N service network elements. In this way, this application supports processing of the task that requires the plurality of service functions.

## Description

### TECHNICAL FIELD

This application relates to the field of communications, and more specifically, to a task processing method and a communication apparatus.

### BACKGROUND

In a 5th generation (5th generation, 5G) network, a server corresponding to a task accessed by a user is deployed in a data network (data network, DN). The 5G network supports a service function chain (service function chain, SFC) domain (domain) between a user plane function (user plane function, UPF) network element and the DN. The service function chain domain is configured to provide some value-added services for a task of a connection type, for example, a firewall (firewall, FW) service, a load balance (load balance, LB) service, a network address translation (network address translation, NAT) service, a traffic optimization (traffic optimization, TO) service, and a virtual private network (virtual private network, VPN) service.

Specifically, the SFC domain includes a classifier (classifier) and a service switch (service switch). The classifier is configured to identify a value-added service required by a task, and the service switch is configured to forward a task data packet to a server/processor corresponding to the value-added service. For example, if determining that an FW service and a NAT service need to be provided for a specific task, the classifier may configure an SFC identifier (identifier, ID) for the specific task, and then send this task data packet (including the SFC ID) to the service switch. The service switch determines, based on the SFC ID of the task, to first send the task data packet to an FW processor that can provide the FW service, and then send the task data packet to a NAT processor that can provide the NAT service.

A future network will provide functions other than a connection, such as a computing function, a data function, and a security function. A new task may integrate the plurality of functions. In addition, the future network may support native (native) functions, such as a computing function, a data function, and a security function. In other words, the computing function, the data function, the security function, and the like are deployed inside the network, to be specific, deployed on different service network elements (for example, a UPF or another network element), but not in the DN. However, the foregoing task processing procedure is designed based on a server corresponding to a task accessed by a user being deployed in the DN. A service function required by a task is single (only the connection service function). When a specific task requires a plurality of service functions, the foregoing task processing procedure cannot meet the requirement.

### SUMMARY

This application provides a task processing method and a communication apparatus, to process a task that requires a plurality of service functions.

According to a first aspect, a task processing method is provided, including: determining M pieces of association information associated with one task, where the M pieces of association information are associated with N service network elements, one piece of association information in the M pieces of association information is associated with one service network element in the N service network elements, an I^{th} piece of association information in the M pieces of association information includes an I^{th} service function list and an I^{th} piece of indication information, the I^{th} service function list includes at least one service function provided by a service network element associated with the I^{th} piece of association information for the task, the I^{th} piece of indication information indicates the service network element associated with the I^{th} piece of association information to send data to a service network element associated with an (I+1)^{th} piece of association information, the data is obtained by processing, based on the I^{th} service function list, the task by the service network element associated with the I^{th} piece of association information, an M^{th} piece of association information in the M pieces of association information includes an M^{th} service function list, the M^{th} service function list includes at least one service function provided by a service network element associated with the M^{th} piece of association information in the N service network elements for the task, M is a positive integer greater than 1, I is a positive integer less than M, and N is a positive integer equal to or less than M; and sending the M pieces of association information to the N service network elements.

This solution in the first aspect may be performed by a control network element, or may be performed by a network function, a logical function, a chip, an integrated circuit, or the like configured to perform a control function. This is not limited herein. For ease of description, the following uses the control network element as an example for description.

Specifically, a service function (service function, SF) that needs to be performed by each of the N service network elements on the task and a processing sequence between the service network elements are determined, and the pieces of information are sent to the N service network elements. Each of the N service network elements may process the task based on the pieces of information. In this way, this application supports processing of the task that requires the plurality of service functions.

In some implementations of the first aspect, determining the M pieces of association information associated with the one task includes: determining task information and M pieces of service information, where the M pieces of service information are associated with the N service network elements, one piece of service information in the M pieces of service information is associated with one service network element in the N service network elements, the one piece of service information in the M pieces of service information indicates at least one service function supported by the associated service network element in the N service network elements, the task information indicates at least two service functions required by the task, and at least one service function included in a service function list included in each of the M pieces of association information belongs to the at least two service functions; and determining the M pieces of association information based on the task information and the M pieces of service information.

Specifically, the control network element may determine, based on the SF supported by each service network element and the at least two SFs required by the task, the SF performed by each service network element on the task, and determine a processing sequence between the service network elements (where in this application, the control network element may preconfigure or dynamically establish information about a transmission channel between the service network elements, so as to determine the processing sequence between the service network elements), so as to determine the M pieces of association information.

In some implementations of the first aspect, determining the M pieces of service information includes: receiving M pieces of registration information, where the M pieces of registration information are associated with the N service network elements, one piece of service information in the M pieces of registration information is associated with one service network element in the N service network elements, and one piece of registration information in the M pieces of registration information includes the service information associated with the service network element in the N service network elements.

In this way, the control network element may obtain the M pieces of service information.

In some implementations of the first aspect, determining the M pieces of service information includes: sending query information, where the query information is used to request to query the M pieces of service information; and receiving response information, where the response information includes the M pieces of service information.

In this way, the control network element may obtain the M pieces of service information.

In some implementations of the first aspect, determining the task information includes: receiving request information, where the request information is used to request to process the task, and the request information includes the task information.

In this way, the control network element may obtain the task information.

In some implementations of the first aspect, the service function list included in each of the M pieces of association information is a service identifier, and the service identifier is associated with the at least one service function included in the corresponding service function list.

A service identifier used to associate at least one service function performed by a corresponding service network element on the task is set. In this way, this application supports reducing signaling overheads.

In some implementations of the first aspect, each of the M pieces of association information includes a service chain identifier of the task, the service chain identifier of the task is associated with M service function lists, and the M service function lists are in a one-to-one correspondence with the M pieces of association information.

The service chain identifier is set. In this way, this application supports joint processing of the task by the N service network elements. To be specific, each of the N service network elements may determine, based on the service chain identifier, a service function list corresponding to the service network element, and process the task based on the service function list corresponding to the service network element.

In some implementations of the first aspect, the I^{th} piece of indication information is indication information of the service network element associated with the (I+1)^{th} piece of association information, and the indication information of the service network element associated with the (I+1)^{th} piece of association information includes tunnel information of the service network element associated with the (I+1)^{th} piece of association information.

In this way, data can be forwarded to a subsequent service network element.

According to a second aspect, a task processing method is provided, including: receiving association information, where the association information includes a first service function list and indication information, the first service function list includes at least one service function provided by a first service network element for a task, the indication information indicates the first service network element to send data to a second service network element, and the data is obtained by processing the task by the first service network element based on the first service function list; and processing the task based on the association information.

This solution according to the second aspect may be performed by a service network element, or may be performed by a chip, an integrated circuit, or the like configured to perform a function of a service network element. This is not limited herein. For ease of description, the following uses the service network element as an example for description.

Specifically, the service network element may process the task based on the association information sent by a control network element, and may determine, based on the indication information in the corresponding association information, to send the data to a subsequent service network element. In this way, this application supports processing of the task that requires a plurality of service functions.

In some implementations of the second aspect, processing the task based on the association information includes: processing the task based on the first service function list, to obtain the data; and sending the data to the second service network element based on the indication information.

In this way, this application supports joint processing of the task by the plurality of service network elements.

In some implementations of the second aspect, processing the task based on the association information includes: processing the task based on the first service function list, to obtain the data; and sending a service chain identifier of the task and the data to the second service network element based on the indication information, where the service chain identifier of the task is associated with a second service function list, the second service function list includes at least one service function provided by the second service network element for the task, and the association information further includes the service chain identifier of the task.

In this way, this application supports joint processing of the task by the plurality of service network elements.

In some implementations of the second aspect, the association information is determined based on task information and M pieces of service information, the M pieces of service information are associated with N service network elements, one piece of service information in the M pieces of service information is associated with one service network element in the N service network elements, the one piece of service information in the M pieces of service information indicates at least one service function supported by the associated service network element in the N service network elements, the task information indicates at least two service functions required by the task, the at least one service function included in the first service function list belongs to the at least two service functions, and the N service network elements include the first service network element and the second service network element.

In this way, this application supports joint processing of the task by the plurality of service network elements.

In some implementations of the second aspect, the first service function list is a service identifier, and the service identifier is associated with the at least one service function included in the first service function list.

A service identifier used to associate at least one service function performed by a corresponding service network element on the task is set. In this way, this application supports reducing signaling overheads.

In some implementations of the second aspect, the indication information is indication information of the second service network element, and the indication information of the second service network element includes tunnel information of the second service network element.

In this way, data can be forwarded to a subsequent service network element.

According to a third aspect, a communication system is provided, including a control network element and M service network elements. The control network element is configured to determine M pieces of association information associated with one task, where the M pieces of association information are associated with the N service network elements, one piece of association information in the M pieces of association information is associated with one service network element in the N service network elements, an I^{th} piece of association information in the M pieces of association information includes an I^{th} service function list and an I^{th} piece of indication information, the I^{th} service function list includes at least one service function provided by a service network element associated with the I^{th} piece of association information for the task, the I^{th} piece of indication information indicates the service network element associated with the I^{th} piece of association information to send data to a service network element associated with an (I+1)^{th} piece of association information, the data is obtained by processing, based on the I^{th} service function list, the task by the service network element associated with the I^{th} piece of association information, an M^{th} piece of association information in the M pieces of association information includes an M^{th} service function list, the M^{th} service function list includes at least one service function provided by a service network element associated with the M^{th} piece of association information in the N service network elements for the task, M is a positive integer greater than 1, I is a positive integer less than M, and N is a positive integer equal to or less than M; the control network element is configured to send the M pieces of association information to the N service network elements; an I^{th} service network element in the N service network elements is configured to receive association information that is in the M pieces of association information and that is associated with the I^{th} service network element; and the I^{th} service network element is configured to process the task based on the association information that is in the M pieces of association information and that is associated with the I^{th} service network element.

In some implementations of the third aspect, the I^{th} service network element is further configured to: process the task based on a service function list in the association information that is in the M pieces of association information and that is associated with the I^{th} service network element, to obtain the data; and send the data to an (I+1)^{th} service network element based on indication information in the association information that is in the M pieces of association information and that is associated with the I^{th} service network element.

In some implementations of the third aspect, the I^{th} service network element is further configured to: process the task based on a service function list in the association information that is in the M pieces of association information and that is associated with the I^{th} service network element, to obtain the data; and send a service chain identifier of the task and the data to an (I+1)^{th} service network element based on indication information in the association information that is in the M pieces of association information and that is associated with the I^{th} service network element, where the service chain identifier of the task is associated with a service function list associated with the (I+1)^{th} service network element, and the association information that is in the M pieces of association information and that is associated with the I^{th} service network element further includes the service chain identifier of the task.

In some implementations of the third aspect, the service function list in the association information that is in the M pieces of association information and that is associated with the I^{th} service network element is a service identifier, and the service identifier is associated with at least one service function included in the service function list in the association information that is in the M pieces of association information and that is associated with the I^{th} service network element.

In some implementations of the third aspect, the control network element is further configured to: determine task information and M pieces of service information, where the M pieces of service information are associated with the N service network elements, one piece of service information in the M pieces of service information is associated with one service network element in the N service network elements, the one piece of service information in the M pieces of service information indicates at least one service function supported by the associated service network element in the N service network elements, the task information indicates at least two service functions required by the task, and at least one service function included in a service function list included in each of the M pieces of association information belongs to the at least two service functions; and determine the M pieces of association information based on the task information and the M pieces of service information.

In some implementations of the third aspect, the control network element is further configured to: receive M pieces of registration information, where the M pieces of registration information are associated with the N service network elements, one piece of service information in the M pieces of registration information is associated with one service network element in the N service network elements, and one piece of registration information in the M pieces of registration information includes the service information associated with the service network element in the N service network elements.

In some implementations of the third aspect, the control network element is further configured to: send query information, where the query information is used to request to query the M pieces of service information; and receive response information, where the response information includes the M pieces of service information.

In some implementations of the third aspect, the control network element is further configured to: receive request information, where the request information is used to request to process the task, and the request information includes the task information.

In some implementations of the third aspect, the I^{th} piece of indication information is indication information of the service network element associated with the (I+1)^{th} piece of association information, and the indication information of the service network element associated with the (I+1)^{th} piece of association information includes tunnel information of the service network element associated with the (I+1)^{th} piece of association information.

According to a fourth aspect, a communication apparatus is provided. The communication apparatus may be a control network element, or may be a device, a module, or the like configured to perform a function of the control network element.

In a possible implementation, the communication apparatus may include modules or units that are in one-to-one correspondence with the method/operations/steps/actions described in the first aspect. The module or unit may be implemented by a hardware circuit, software, or a combination of a hardware circuit and software.

According to a fifth aspect, a communication apparatus is provided. The communication apparatus may be a service network element, or may be a device, a module, or the like configured to perform a function of the service network element.

In a possible implementation, the communication apparatus may include modules or units that are in one-to-one correspondence with the method/operations/steps/actions described in the second aspect. The module or unit may be implemented by a hardware circuit, software, or a combination of a hardware circuit and software.

According to a sixth aspect, a communication apparatus is provided, and includes a processor. The processor is configured to enable, by executing a computer program or instructions or through a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory, configured to store the computer program or the instructions.

In a possible implementation, the communication apparatus further includes a communication interface, configured to input a signal and/or output a signal.

According to a seventh aspect, a communication apparatus is provided, and includes a logic circuit and an input/output interface. The input/output interface is configured to input and/or output a signal, and the logic circuit is configured to perform the method according to any one of the first aspect and the possible implementations of the first aspect, or the logic circuit is configured to perform the method according to any one of the second aspect and the possible implementations of the second aspect.

According to an eighth aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to a ninth aspect, a computer program product is provided, and includes instructions. When the instructions are run on a computer, the method according to any one of the first aspect and the possible implementations of the first aspect is performed, or the method according to any one of the second aspect and the possible implementations of the second aspect is performed.

For descriptions of beneficial effect of any one of the third aspect to the ninth aspect, refer to descriptions of beneficial effect of the first aspect and the second aspect.

### BRIEF DESCRIPTION OF DRAWINGS

FIG. 1 is a diagram of a communication system 100 to which an embodiment of this application is applicable;
FIG. 2 is a diagram of an interaction procedure of a task processing method 200 according to an embodiment of this application;
FIG. 3 is a diagram of an interaction procedure of a task processing method 300 according to an embodiment of this application;
FIG. 4 is a diagram of an interaction procedure of a task processing method 400 according to an embodiment of this application;
FIG. 5 is a diagram of data transmission according to an embodiment of this application;
FIG. 6 is another diagram of data transmission according to an embodiment of this application;
FIG. 7 is a block diagram of a communication apparatus 700 according to an embodiment of this application;
FIG. 8 is a block diagram of a communication apparatus 800 according to an embodiment of this application; and
FIG. 9 is a block diagram of a communication apparatus 900 according to an embodiment of this application.

### DESCRIPTION OF EMBODIMENTS

For ease of understanding embodiments of this application, the following descriptions are provided first.
1. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
2. Various numbers in this application are distinguished for ease of description, but are not intended to limit the scope of this application. Sequence numbers in this application do not mean an execution sequence, and the execution sequence of the processes should be determined based on functions and internal logic of the processes. For example, terms "first", "second", "third", "fourth", and other various term labels (if any) in the specification, claims, and accompanying drawings of this application are used for distinguishing similar objects, but are not necessarily used for describing a specific sequence or order. It should be understood that the data termed in such a way are interchangeable in proper circumstances, so that embodiments of the present invention described herein can be implemented in other orders than the order illustrated or described herein.
3. The terms "include", "have", and variants thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.
4. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.
5. "Storage" or "store" in this application may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.
6. A "protocol" in this application may refer to a standard protocol in the communication field, for example, may include a 4th generation (4th generation, 4G) network, a 5G network, a new radio (new radio, NR) protocol, a 5.5G network, a 6th generation (6th generation, 6G) network, and a related protocol applied to a future communication system. This is not limited.
7. Arrows or blocks shown by dashed lines in the diagrams of the accompanying drawings in the specification of this application indicate optional steps or optional modules.
8. Any embodiment or design scheme described as "example" or "for example" in this application should not be explained as being more preferred or having more advantages than another embodiment or design scheme. Exactly, use of the words such as "example" or "for example" is intended to present a related concept in a specific manner for ease of understanding.
9. In this application, unless otherwise specified, "/" indicates an "or" relationship between associated objects. For example, A/B may indicate A or B. "And/or" in this application describes only an association for describing associated objects and indicates that three relationships may exist. For example, A and/or B may indicate the following three cases: Only A exists, both A and B exist, and only B exists, where A and B may be singular or plural.

First, a communication system to which an embodiment of this application is applicable is described.

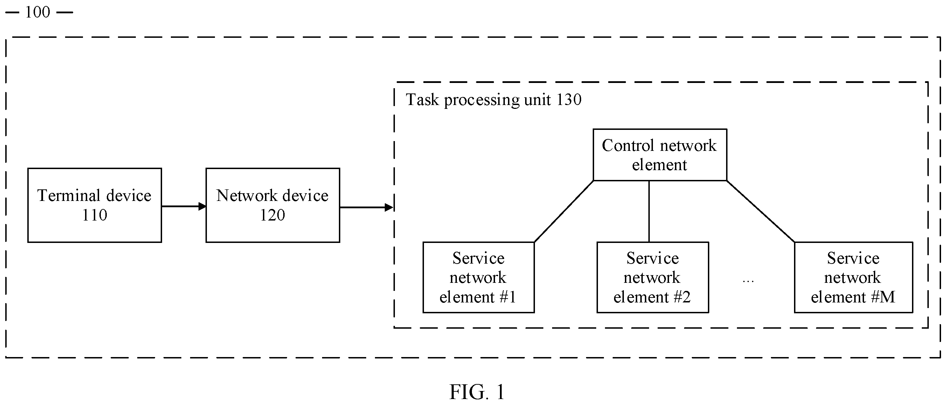

FIG. 1 is a block diagram of a communication system 100 to which an embodiment of this application is applicable. As shown in FIG. 1, the communication system 100 includes a terminal device 110, a network device 120, and a task processing unit 130. A schematic architecture of the task processing unit 130 includes a control network element (which may be, for example, a service function chain controller (service function chain controller, SFCC), or may be a network element with another name) and M service network elements (which may be, for example, a service function processor and forwarder (service function processor and forwarder, SFPF), or may be a network element with another name), where M is a positive integer.

It should be noted that, for different forms, the control network element and/or the service network element may also be referred to as a network function (network function, NF) or a logical function (logical function), and may be independently deployed, or may be co-deployed with another network function, logical function, or network element. For ease of description, the following uses an example in which the control network element is an SFCC and the service network element is an SFPF for description. This is not limited thereto.

The main functions of the SFPF include task processing and forwarding functions. Task processing includes performing one or more SFs on a task data packet, for example, performing data compression and anonymization. The forwarding function includes sending the task data packet to another SFPF. To support a native computing function, a data function, and a security function, one SFPF supports one or more SFs. The one or more SFs may belong to a same type (for example, a connection type, a data type, a computing type, or a security type), or the one or more SFs may belong to different types (for example, the one or more SFs belong to a connection type and a data type, or the one or more SFs belong to a data type and a computing type). This is not limited. Flexible cross-domain orchestration and scheduling are performed on the M SFPFs, to support a task that requires a plurality of types (for example, connection/computing/data/security).

It should be noted that the SFPF supports one or more SFs, and the SF may be deployed on the SFPF, or the SF and the SFPF may be co-deployed. A specific form of the SFPF is not limited, and may be a network element, for example, an enhanced UPF, an access network (radio access network, RAN), mobile edge computing (mobile edge computing, MEC), or multi-access edge computing (multi-access edge computing). The SFPF is also applicable to a newly defined (if any) network element with a computing function/data function/security function for task processing and forwarding functions.

The SFPF may be deployed in a distributed manner, and may be deployed based on a location area and/or a function type. For example, when the SFPF is deployed in the distributed manner, refer to FIG. 1. When the SFPF is deployed based on a location area, one or more SFPFs may be deployed in one area (each SFPF may provide different or same types of SFs). When the SFPF is deployed based on a function type, one or more SFPFs that can provide a same type of SFs may be deployed together.

The SFCC is configured to control and manage the SFPF, and main functions include determining a proper SFPF and forwarding information between SFPFs based on a task requirement, determining a service function chain identifier (SFC ID) for a task, and the like. The SFCC may be deployed in a centralized manner, or may be deployed in a cascading manner. When the SFCC is deployed in the centralized manner, the SFCC in the task processing unit 130 manages the M SFPFs. When the SFCC is deployed in the cascading manner, the SFCC includes a central-SFCC (central-SFCC) and a subdomain SFCC (sub-SFCC). The SFCC in the task processing unit 130 is a central-SFCC, and the task processing unit 130 further includes Q subdomain SFCCs (managing one or more SFPFs in a subdomain, which are not shown in FIG. 1). The central-SFCC manages the subdomain SFCC, and one subdomain SFCC may manage at least one associated SFPF. Q is a positive integer, and Q is less than or equal to M.

It should be noted that a specific form of the SFCC is not limited, and may be an enhanced session management network element (session management function, SMF) network element, or may be a newly defined (if any) network element with a computing function/data function/security function for controlling and managing a function.

When the SFCC is deployed in the cascading manner, this application supports subdomain division based on a location area and/or a function type. For example, when the subdomains are divided based on the location area, a subdomain SFCC #1 (which is used to manage an SFPF #1 in an area #1) may be deployed in the area #1 in which the SFPF #1 is located, and a subdomain SFCC #2 (which is used to manage an SFPF #2 in an area #2) may be deployed in the area #2 in which the SFPF #2 is located. When the subdomains are divided based on the function type, all SFs supported by the SFPF #1 belong to the computing service function, and may be deployed in the subdomain SFCC #1, all SFs supported by the SFPF #2 belong to the data service function, and may be deployed in the subdomain SFCC #2, and the like Different SFPFs may provide different SFs, or may provide a same SF. This is not limited.

It should be noted that the communication system 100 shown in FIG. 1 is merely used as an example for description, and is not used as a final limitation. The task processing unit 130 may be integrated into the network device 110.

In addition, the terminal device 110 is a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device 110 may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a compute device, or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

A communication apparatus configured to implement a function of the terminal device 110 may be a terminal device, or may be an apparatus that can support the terminal device in implementing the function, for example, a chip system. The apparatus may be mounted in the terminal device or used in combination with the terminal device. In this application, the chip system may include a chip, or may include the chip and another discrete component.

In addition, the network device 120 is a device having a wireless transceiver function, and is configured to communicate with the terminal device 110. The network device 120 may be a node in a RAN, may also be referred to as a base station, may also be referred to as a RAN node, and may be an evolved NodeB (evolved NodeB, eNB or eNodeB) in LTE, a base station in a 5G network like a gNodeB (gNB), or a base station in a public land mobile network (public land mobile network, PLMN) evolved after 5G, a broadband network gateway (broadband network gateway, BNG), an aggregation switch, a third-generation partner project (the 3rd generation partnership project, 3GPP) access device, or the like.

A RAN may be configured as a RAN defined in the 3GPP protocol, an open radio access network (open radio access network, O-RAN), or a cloud access network (cloud radio access network, C-RAN). The network device 110 may further include various forms of base stations, for example, a macro base station, a micro base station (also referred to as a small station), a relay station, a transmitting/receiving point (transmitting/receiving point, TRP), a transmission point (transmission point, TP), a mobile switching center, a device that bears a base station function in device-to-device (device-to-device, D2D) communication, vehicle-to-everything (vehicle-to-everything, V2X) communication, and machine-to-machine (machine-to-machine, M2M) communication, a network device in a non-terrestrial network (non-terrestrial network, NTN), and the like. This is not specifically limited.

The network device 120 may further include a network element or a module that implements some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be implemented by both a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

A communication apparatus configured to implement a function of the network device 120 may be a network device, or may be an apparatus that can support the network device in implementing the function, for example, a chip system. The apparatus may be mounted in the network device or used in combination with the network device. In embodiments of this application, the chip system may include a chip, or may include a chip and another discrete component.

The communication system 100 may alternatively be the following system: a long term evolution (long term evolution, LTE) system, an LTE frequency division duplex (frequency division duplex, FDD) system, an LTE time division duplex (time division duplex, TDD) system, a 5G system, a 6G system, an inter-satellite communication system, a satellite communication system, or another NTN system. The satellite communication system includes a satellite base station and a terminal device. The satellite base station provides a communication service for the terminal device. The satellite base station may also communicate with a terrestrial base station. A satellite may serve as a base station, or may serve as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

In addition, the communication system 100 may alternatively be a terrestrial cellular communication system, a high altitude platform station (high altitude platform station, HAPS) communication system, a V2X system, an integrated access and backhaul (integrated access and backhaul, IAB) system, a reconfigurable intelligent surface (reconfigurable intelligent surface, RIS) communication system, or the like. This is not limited.

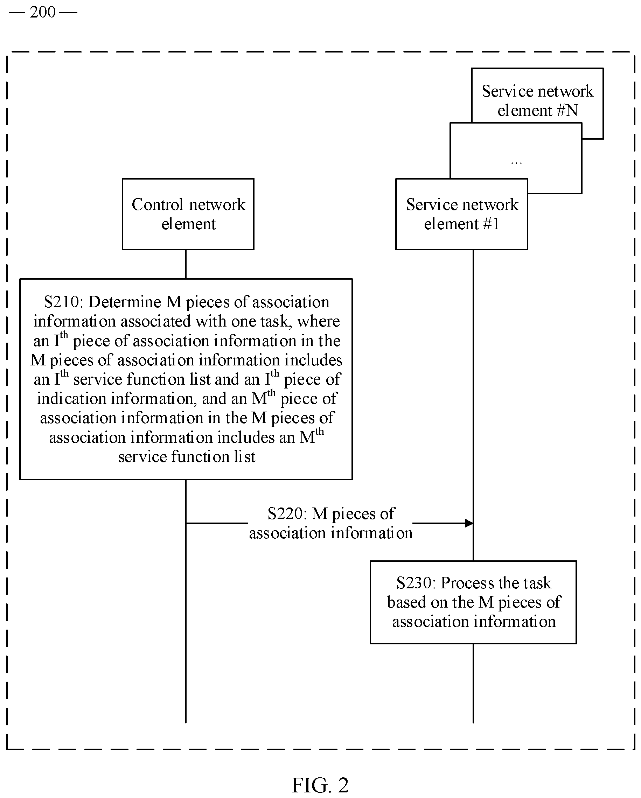

The following describes interaction between the control network element and the service network element in the communication system 100 with reference to FIG. 2. It should be noted that, in the interaction between the SFCC and the SFPF described below, if the SFCC is a central-SFCC and a subdomain SFCC that are deployed in the cascading manner, the subdomain SFCC interacts with the SFPF, and the central-SFCC interacts with the subdomain SFCC.

FIG. 2 is a diagram of an interaction procedure of a task processing method 200 according to an embodiment of this application. The method 200 may be performed by a control network element and a service network element, or may be performed by a module, a chip system, or the like configured to perform functions of the control network element and the service network element. This is not limited. For ease of description, the following uses the control network element and the service network element as an example for description. The method 200 includes the following steps.

S210: The control network element determines M pieces of association information (which may alternatively be another name, for example, mapping information, and this is not limited) associated with one task, where an I^{th} piece of association information in the M pieces of association information includes an I^{th} service function list and an I^{th} piece of indication information, and an M^{th} piece of association information in the M pieces of association information includes an M^{th} service function list. M is an integer greater than or equal to 2, and I is a positive integer less than M.

In a possible implementation, the I^{th} piece of association information is any one of first M-1 pieces of association information in the M pieces of association information, and the M^{th} piece of association information is the last piece of association information in the M pieces of association information. The M pieces of association information are associated with the one task. In other words, service functions included in the M service function lists in the M pieces of association information are all service functions serving the task. One piece of association information in the M pieces of association information is associated with one service network element, and the M pieces of association information are associated with N service network elements, where N is a positive integer less than or equal to M. Content included in each piece of association information may be different or may be the same. Refer to Table 1. Content described in Table 1 is merely used as an example, and is not used as a final limitation.

**Table 1**

| | | |
|---|---|---|
| Association information #1 | Service function list #1 | Indication information #1 |
| Association information #2 | Service function list #2 | Indication information #2 |
| ... | ... | ... |
| Association information #M | Service function list #M | N/A |

As described in Table 1, the association information #1 includes the service function list #1 and the indication information #1. The service function list #1 includes at least one SF provided by a service network element #1 for the task (for example, a task #1). The at least one SF forms the service function list #1. The indication information #1 indicates the service network element #1 to send data #1 to a service network element #2. The data #1 is obtained by processing the task by the service network element #1 based on the service function list #1. The association information #2 includes the service function list #2 and the indication information #2. The service function list #2 includes at least one SF provided by the service network element #2 for the task. The at least one SF forms the service function list #2. The indication information #2 indicates the service network element #2 to send data #2 to a service network element #3. The data #2 is obtained by processing the task by the service network element #2 based on the service function list #2. "..." indicates that there is other association information, and content included in the other association information is similar to content included in the association information #1. The association information #M includes the service function list #M, and the service function list #M includes at least one SF provided by a service network element #M for the task. N/A indicates that there is no information. In other words, the association information #M does not include indication information.

In conclusion, the I^{th} piece of association information may be any one of the association information #1 to association information #M-1, the I^{th} service function list may be any one of the service function list #1 to a service function list #M-1, and the I^{th} piece of indication information may be any one of the indication information #1 to indication information #M-1. The M^{th} piece of association information is the association information #M, and the M^{th} service function list is the service function list #M.

In Table 1, each of the first M-1 pieces of association information in the M pieces of association information may include a service function list and indication information. The service function list indicates at least one SF provided by each associated service network element for the task. The indication information is used to associate two SFPFs that have a sequence relationship in a processing sequence. For example, the indication information #1 is used to associate the service network element #1 and the service network element #2, and the service network element #2 receives and processes data from the service network element #1. The indication information #2 is used to associate the service network element #2 and the service network element #3, and the service network element #3 receives and processes data from the service network element #2. The association information #M includes the service function list #M, and indicates the service network element #M to perform at least one corresponding SF on the task.

In a possible implementation, the I^{th} indication information may be indication information of an (I+1)^{th} service network element, and the indication information of the (I+1)^{th} service network element includes tunnel information (for example, a general packet radio service tunneling protocol-user plane (general packet radio service tunneling protocol-user plane, GTP-U) tunnel endpoint identifier (tunnel endpoint identifier, TEID)) of the (I+1)^{th} service network element and/or IPv6 address information (for example, an IPv6 address includes information indicating the task) of the (I+1)^{th} service network element. In this way, data can be forwarded to a next service network element.

In a possible implementation, the association information #M does not include indication information #M, and indicates that the service network element #M is the last service network element. In other words, the data does not need to be sent to another service network element. In another possible implementation, the association information #M includes indication information #M, and the indication information #M indicates the service network element #M to receive data from a service network element #M-1, or may indicate that the service network element #M is the last service network element.

It should be noted that, a service network element associated with each of the M pieces of association information is configured to process the task. In other words, the M pieces of association information provide a mapping rule or a processing rule for the N service network elements to jointly process the task. Different association information in the M pieces of association information may be associated with a same service network element. For example, the association information #1 is associated with the service network element #1, and association information #3 may also be associated with the service network element #1. Therefore, the quantity N of service network elements associated with the M pieces of association information is less than or equal to M.

In a possible implementation, that the control network element determines the M pieces of association information includes the following #a and #b.

#a. The control network element determines task information of a task and M pieces of service information (which may alternatively be another information name, for example, function information, and this is not limited herein) associated with the task, where each of the M pieces of service information is associated with one service network element.

Specifically, each piece of service information indicates at least one SF supported by an associated service network element. For example, service information #1 indicates at least one SF supported by the service network element #1, and service information #2 indicates at least one SF supported by the service network element #2. By analogy, service information #M indicates at least one SF supported by the service network element #M. It may be understood that a quantity of service network elements associated with the M pieces of service information is also less than or equal to M. In other words, different pieces of service information in the M pieces of service information may be associated with a same service network element. For example, the service information #1 is associated with the service network element #1, and service information #3 is associated with the service network element #1. Therefore, a quantity of service network elements associated with the M pieces of service information is less than or equal to M.

The task information indicates at least two SFs required by the task. All SFs included in the service function list belong to the at least two SFs required by the task. For example, the at least one SF included in the service function list #1 belongs to the at least two SFs, and the at least one SF included in the service function list #2 belongs to the at least two SFs. By analogy, the at least one SF included in the service function list #M belongs to the at least two SFs. In other words, the task corresponds to the task information #1 (indicating the at least two SFs required by the task) and is jointly processed by the M service network elements, and each service network element may perform some SFs in the at least two SFs. For example, the task information #1 indicates an SF #1 to an SF #6 (a specific type of the SF is not limited), the service information #1 indicates that the service network element #1 supports the SF #1 and an SF #2, the service information #2 indicates that the service network element #2 supports an SF #3 to an SF #5, and the service information #3 indicates that the service network element #3 supports the SF #6. For another example, the task information #1 indicates an SF #1 to an SF #6 (a specific type of the SF is not limited), the service information #1 indicates that the service network element #1 supports the SF #1, the service information #2 indicates that the service network element #2 supports an SF #3 to an SF #5, the service information #3 indicates that the service network element #3 supports the SF #6, and the service information #4 indicates that the service network element #1 supports an SF #2.

#b. The control network element determines the M pieces of association information based on the task information of the task and the M pieces of service information.

The control network element may determine, based on the at least one SF supported by each service network element and the at least two SFs required by the task, the SF performed by each service network element on the task, and determine a processing sequence between the service network elements (where in this application, the control network element may preconfigure or dynamically establish information about a transmission channel between the service network elements, so as to determine the processing sequence between the service network elements), so as to determine the M pieces of association information.

For example, the control network element may determine, based on the task information #1, the service information #1, the service information #2, and the service information #3, that the service network element #1 performs the SF #1 and the SF #2 on the task, the service network element #2 performs the SF #3 to the SF #5 on the task, and the service network element #3 performs the SF #6 on the task. Further, the control network element determines the association information #1, where the association information #1 indicates the service network element #1 to perform the SF #1 and the SF #2 on the task, and send data to the service network element #2, determines the association information #2, where the association information #2 indicates the service network element #2 to perform the SF #3 to the SF #5 on the task, and send data to the service network element #3, and determines the association information #3, where the association information #3 indicates the service network element #3 to perform the SF #6 on the task.

S220: The control network element sends the M pieces of association information to the N service network elements.

Correspondingly, the N service network elements receive the M pieces of association information.

When N is equal to M, in a first possible implementation, the control network element may send corresponding association information to each of the M service network elements. For example, the control network element sends the association information #1 to the service network element #1, and the control network element sends the association information #2 to the service network element #2. By analogy, the control network element sends the association information #M to the service network element #M. In a second possible implementation, the control network element sends the M pieces of association information to the service network element #1, and the control network element sends the M pieces of association information to the service network element #2. By analogy, the control network element sends the M pieces of association information to the service network element #M. In the first possible implementation, each service network element may obtain association information corresponding to the service network element, and may determine, based on the association information of the service network element, an associated service network element and an SF that needs to be performed by the service network element. This can effectively reduce signaling overheads. In the second possible implementation, each service network element may obtain association information corresponding to another service network element. This helps the service network element obtain more comprehensive information.

When N is less than M, the control network element may send a plurality of pieces of association information to a same service network element. For example, the control network element sends the association information #1 to the service network element #1, sends the association information #2 to the service network element #2, and sends the association information #1 to the service network element #1. This is not limited.

S230: The N service network elements process the task based on the M pieces of association information.

Specifically, each service network element may process the task based on association information of the service network element. For example, the service network element #1 processes the task based on the association information #1, to obtain the data #1, and sends the data #1 to the service network element #2. The service network element #2 processes the task (which may be the data #1) based on the association information #2, to obtain the data #2, and sends the data #2 to the service network element #3. By analogy, the service network element #M processes the task (which may be data #M-1 from the service network element #M-1) based on the association information #M.

In a possible implementation, when a quantity of service network elements associated with the M pieces of association information is less than M, the service network element #1 processes the task based on the association information #1, to obtain the data #1, and sends the data #1 to the service network element #2. The service network element #2 processes the task (which may be the data #1) based on the association information #2, to obtain the data #2, and sends the data #2 to the service network element #1. The service network element #1 processes the task (which may be the data #1) based on the association information #3, to obtain the data #3, and sends the data #3 to the service network element #3. By analogy, the service network element #N processes the task (which may be the data #M-1 from the service network element #N-1) based on the association information #M.

In conclusion, the SF that needs to be performed by each of the M service network elements on the task and a processing sequence between the service network elements are determined, and the pieces of information are sent to the M service network elements. Each of the M service network elements may process the task based on the pieces of information. In this way, this application supports processing of a task that requires a plurality of service functions.

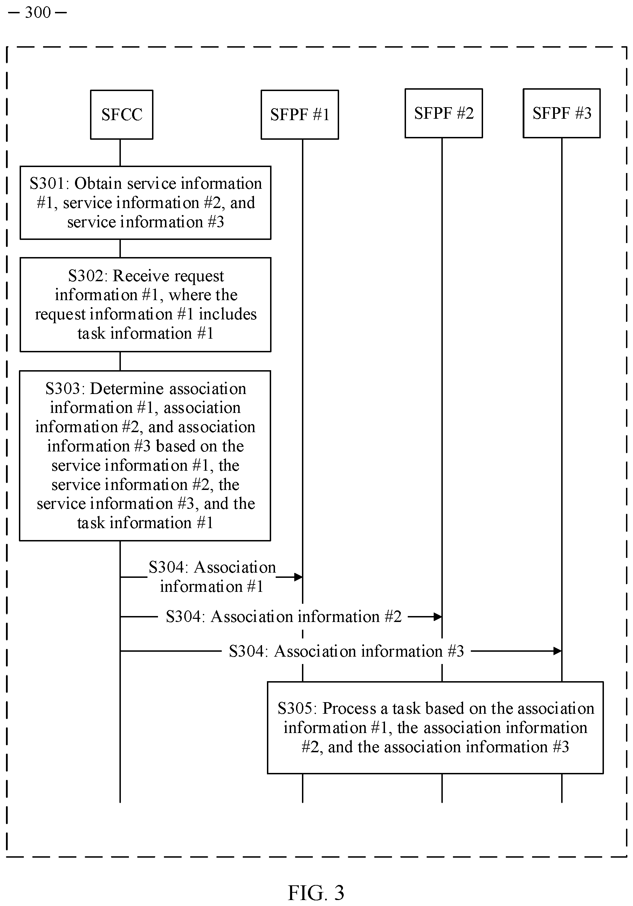

The following further describes the method in FIG. 2 with reference to FIG. 3.

It should be noted that the following content is described by using an example in which a quantity of service network elements is the same as a quantity of service information and a quantity of association information. However, for a scenario in which a quantity of service network elements is less than a quantity of association information, refer to the following description. Details are not described again.

FIG. 3 is a diagram of an interaction procedure of a task processing method 300 according to an embodiment of this application. The method shown in FIG. 3 may be performed by an SFCC, an SFPF #1, an SFPF #2, and an SFPF #3, or may be performed by a module, a chip, or the like configured to perform functions of an SFCC, an SFPF #1, an SFPF #2, and an SFPF #3. This is not limited. For ease of description, the following uses the SFCC, the SFPF #1, the SFPF #2, and the SFPF #3 as an example for description. In an actual system, one task may correspond to another quantity of SFPFs. The method 300 includes the following steps.

S301: An SFCC obtains service information #1, service information #2, and service information #3.

Specifically, the SFCC may obtain the service information #1 of the SFPF #1, the service information #2 of the SFPF #2, and the service information #3 of the SFPF #3 in the following several manners. The service information #1 indicates at least one SF supported by the SFPF #1, the service information #2 indicates at least one SF supported by the SFPF #2, and the service information #3 indicates at least one SF supported by the SFPF #3.

Manner 1: The SFPFs register, with the SFCC, the at least one SF supported by the SFPFs. To be specific, the SFPF # 1 sends registration information #1 to the SFCC, where the registration information #1 includes the service information #1; the SFPF # 2 sends registration information #2 to the SFCC, where the registration information #2 includes the service information #2; and the SFPF # 3 sends registration information #3 to the SFCC, where the registration information #3 includes the service information #3. In addition, if the SF supported by the SFPF changes, the SFPF may send update information to the SFCC to notify the SFCC.

Manner 2: The SFPFs may register or update, with or to another network element, for example, a network repository function (network repository function, NRF), the at least one SF supported by the SFPFs. Correspondingly, the NRF stores the service information of all the SFPFs. The SFCC sends query information #1 to the another network element (for example, the NRF), where the query information #1 is used to query the service information #1, the service information #2, and the service information #3.

Manner 3: The service information #1, the service information #2, and the service information #3 are preconfigured on the SFCC.

For manner 1, the SFPFs may send information, for example, registration information (only as an example) about SFs supported by the SFPFs to the SFCC. In this way, the SFCC may obtain, based on interaction with the SFPFs, the information about the SFs supported by the SFPFs. When the information about the SF supported by the SFPF changes, the SFPF may also notify the SFCC. In this way, the SFCC can learn of a change of the information about the SF supported by the SFPF. For manner 2, in this application, the information about the SFs supported by the SFPFs may be registered with the another network element (for example, the NRF). The SFCC may interact with the another network element, to obtain the service information of the SFPFs. In this way, impact on an existing network architecture can be reduced as much as possible based on the existing network architecture. For manner 3, in this application, the information about the SFs supported by the SFPFs may be preconfigured in the SFCC, and the SFCC may obtain the service information of the SFPFs without interacting with the another network element or the SFPFs. When the SFCC is deployed in a cascading manner, a subdomain SFCC may determine information about an SF supported by an SFPF managed by the subdomain SFCC, and a central-SFCC may obtain, by using the subdomain SFCC, the information about the SFs supported by all the SFPFs.

In this embodiment of this application, a type of the SFs supported by the SFPFs is not limited in this application, and the SFs supported by the SFPFs may be classified, for example, into a connection class, a computing class, a data class, and a security class. The connection class includes but is not limited to FW, LB, NAT, TO, VPN, and the like. The computing class includes but is not limited to computing offloading, rendering, and the like. The data class includes but is not limited to storage, compression, analysis, and the like. The security class includes but is not limited to authentication, encryption, decryption, and the like. One SFPF may support a plurality of SFs of one type. For example, the SFPF #1 supports the connection class (an SF #101, an SF #102, and an SF #103). One SFPF may alternatively support a plurality of SFs of a plurality of types. For example, the SFPF #1 supports the connection class (the SF #101 and the SF #103) and a computing class (an SF #201 and an SF #202). For ease of understanding, the connection class is numbered starting with 1, the computing class is numbered starting with 2, the security class is numbered starting with 3, and the data class is numbered starting with 4.

S302: The SFCC receives request information #1, where the request information #1 includes task information #1.

Specifically, the request information #1 may be from an application function (application function, AF), a terminal device, a network exposure function (network exposure function, NEF) network element, another management plane entity, or the like. This is not limited. The request information #1 is used to request to process the task, the request information #1 includes task information #1 of the task, and the task information #1 indicates at least two SFs required by the task.

In an implementation, the request information #1 includes at least two SFs. For example, the AF learns, based on a network capability exposure architecture, various types of SFs supported by a network, and determines that the task requires two SFs of the connection class (the SF #101 and the SF #102), two SFs of the computing class (the SF #201 and the SF #202), and two SFs of the security class (an SF #301 and an SF #302).

In another implementation, the request information #1 includes indication information of at least two SFs, and the indication information may be an information name or other information. For example, an information name of the request information #1 is video rendering acceleration request information, and the SFCC determines, based on the information name, that the task requires one SF of the connection class (the SF #101), one SF of the computing class (the SF #201), and two SFs of the data class (an SF #401 and an SF #402).

S303: The SFCC determines association information #1, association information #2, and association information #3 based on the service information #1, the service information #2, the service information #3, and the task information #1.

When each SFPF supports an SF of one type, for example, the SFPF #1 supports the SF #101 to the SF #103, the SFPF #2 supports the SF #201 to the SF #203, the SFPF #3 supports the SF #301 to the SF #303, and the task requires the SF #101, the SF #102, the SF #201, the SF #202, the SF #301, and the SF #302, the SFCC may determine the SFs performed by all the SFPFs. For example, the SFCC determines that the SFPF #1 performs the SF #101 and the SF #102, the SFPF #2 performs the SF #201 and the SF #202, and the SFPF #3 performs the SF #301 and the SF #302. For details, refer to Table 2. Content described in Table 2 is merely used as an example, and is not used as a final limitation.

**Table 2**

| | | |
|---|---|---|
| Association information #1 | SF #101 and SF #102 | Indication information #1 |
| Association information #2 | SF #201 and SF #202 | Indication information #2 |
| Association information #3 | SF #301 and SF #302 | -- |

As shown in Table 2, the association information #1 includes the SF #101, the SF #102, and the indication information #1, the association information #2 includes the SF #201, the SF #202, and the indication information #2, and the association information #3 includes the SF #301 and the SF #302. For the SFPF #1, the SFPF #1 may determine, based on the association information #1, that the SFPF #1 needs to perform the SF #101 and the SF #102 on the task, and determine, based on the indication information #1, to send, to the SFPF #2, data obtained by processing the task. For the SFPF #2, the SFPF #2 may determine, based on the association information #2, that the SFPF #2 needs to perform the SF #201 and the SF #202 on the task, and determine, based on the indication information #2, to send, to the SFPF #3, data obtained by processing the task. For the SFPF #3, the SFPF #3 may determine, based on the association information #3, that the SFPF #3 needs to perform the SF #301 and the SF #302 on the task.

When each SFPF supports a plurality of types of SFs, for example, the SFPF #1 supports the SF #101 and the SF #302, the SFPF #2 supports the SF #102, the SF #202, and the SF #301, and the SFPF #3 supports the SF #201, and the task requires the SF #101, the SF #102, the SF #201, the SF #202, the SF #301, and the SF #302, the SFCC may determine the SFs performed by all the SFPFs. The SFCC determines that the SFPF #1 performs the SF #101 and the SF #302, the SFPF #2 performs the SF #102, the SF #202, and the SF #301, and the SFPF #3 performs the SF #201. For details, refer to Table 3. Content described in Table 3 is merely used as an example, and is not used as a final limitation.

**Table 3**

| | | |
|---|---|---|
| Association information #1 | SF #101 and SF #302 | Indication information #1 |
| Association information #2 | SF #102, SF #202, and SF #301 | Indication information #2 |
| Association information #3 | SF #201 | -- |

As shown in Table 3, the association information #1 includes the SF #101, the SF #302, and the indication information #1, the association information #2 includes the SF #102, the SF #202, the SF #301, and the indication information #2, and the association information #3 includes the SF #201. For the SFPF #1, the SFPF #1 may determine, based on the association information #1, that the SFPF #1 needs to perform the SF #101 and the SF #302 on the task, and determine, based on the indication information #1, to send, to the SFPF #2, data obtained by processing the task. For the SFPF #2, the SFPF #2 may determine, based on the association information #2, that the SFPF #2 needs to perform the SF #102, the SF #202, and the SF #301 on the task, and determine, based on the indication information #2, to send, to the SFPF #3, data obtained by processing the task. For the SFPF #3, the SFPF #3 may determine, based on the association information #3, that the SFPF #3 needs to perform the SF #201 on the task.

In a possible implementation, in this application, the SFCC supports configuring a service identifier (for example, a sub-SFC ID) for an SF performed by each SFPF, and the service identifier is used to associate the at least one SF performed by each SFPF. Further, in this application, the SFCC may configure a global service chain identifier (SFC ID, which may also be another identifier, for example, an app identifier, a data network name (data network name, DNN) identifier, or a UE identifier) for the task, to associate the SFs included in the foregoing service function list or each sub-SFC ID list. In other words, one SFC ID may be associated with M pieces of association information, and the SFC ID of the task is associated with at least two SFs required by the task. For details, refer to Table 4.

Optionally, the global service chain identifier may be sent to the terminal device 110. Subsequently, when sending a data packet related to the task, the terminal device 110 carries the service chain identifier of the task, so that the SFPF can identify the task. When the SFCC is deployed in the cascading manner, the sub-domain SFCC is responsible for allocating the sub-SFC ID, and the central-SFCC is responsible for allocating the global service chain identifier of the task. Content and a form in Table 4 are merely used as an example for understanding, and are not used as a final limitation.

**Table 4**

| SFC ID | Sub-SFC ID list | SF corresponding to the sub-SFC ID | Indication information |
|---|---|---|---|
| SFC ID #1 | Sub-SFC ID #1 | SF #101 and SF #102 | Forwarding channel information of the SFPF #2 |
| | Sub-SFC ID #2 | SF #201 and SF #202 | Forwarding channel information of the SFPF #3 |
| | Sub-SFC ID #3 | SF #301 and SF #302 | -- |
| SFC ID #2 | Sub-SFC ID #4 | SF #101, SF #201 and SF #302 | Forwarding channel information of the SFPF #2 |
| | Sub-SFC ID #5 | SF #102, SF #202 and SF #301 | -- |

As shown in Table 4, when the SFCC configures the SFC ID #1 for the task, the SFCC is associated with the sub-SFC ID #1, the sub-SFC ID #2, and the sub-SFC ID #3. The sub-SFC ID #1 is associated with the SF #101 and the SF #102, the sub-SFC ID #2 is associated with the SF #201 and the SF #202, and the sub-SFC ID #3 is associated with the SF #301 and the SF #302. The forwarding channel information of the SFPF #2 may be the indication information #1, and indicates to send the data to the SFPF #2. The forwarding channel information of the SFPF #3 may be the indication information #2, and indicates to send the data to the SFPF #3.

In a possible implementation, a GTP-U may be used between SFPFs. For example, GTP-U tunnels may be respectively established between the SFPF #1 and the SFPF #2 and between the SFPF #2 and the SFPF #3, and the GTP-U tunnels are identified by different TEIDs.

In another possible implementation, after receiving the data from the SFPF #2 through the GTP-U tunnel between the SFPF #2 and the SFPF #3, the SFPF #3 may associate the corresponding sub-SFC ID #3 and perform the corresponding SF #301 and SF #302.

As shown in Table 4, when the SFCC configures the SFC ID #2 for the task, the SFCC is associated with the sub-SFC ID #4 and the sub-SFC ID #5. The sub-SFC ID #4 is associated with the SF #101, the SF #201, and the SF #302, and the sub-SFC ID #5 is associated with the SF #102, the SF #202, and the SF #301. The forwarding channel information of the SFPF #2 may be the indication information #1, and indicates to send the data to the SFPF #2.

It should be noted that Table 4 is an example of a storage or description form of the association information, and may be another storage or representation form, for example, UE context, session context, a database, or a configuration file. This is not limited. In addition, the SFCC may obtain forwarding channel information of each SFPF, and establish a forwarding channel between the SFPFs. The forwarding channel information of each SFPF may be preconfigured in the SFCC, or may be dynamically established. In a dynamic establishment case, there are the following two manners.

Manner 1: After the SFCC determines M SFPFs and a corresponding processing sequence, the SFCC sends request information to an SFPF. After receiving the request information, the SFPF allocates or determines corresponding forwarding channel information, and sends reply information to the SFCC, where the reply information includes the forwarding channel information.

In a possible implementation, the SFCC may send service chain establishment request information to the SFPF, where the service chain request information includes information about an SF performed by the SFPF. Optionally, the service chain request information further includes an SFC ID/sub-SFC ID. For example, the SFCC determines that the SFPF #1 performs the SF #101 and the SF #102, and service chain request information sent by the SFCC to the SFPF #1 includes the SF #101 and the SF #102. After receiving the service chain request information, the SFPF #1 may allocate or determine forwarding channel information of the SFPF, and report the information to the SFCC. If only unidirectional data forwarding processing is considered, for example, the SFPF #1 ---> the SFPF #2 ---> the SFPF #3, the SFPF #1 may not allocate forwarding channel information, and the SFCC obtains the forwarding channel information of the SFPF #2 and notifies the SFPF #1 of the forwarding channel information. Similarly, the SFCC obtains the forwarding channel information of the SFPF #3 and notifies the SFPF #2 of the forwarding channel information. If bidirectional forwarding processing is considered, the SFCC obtains the forwarding channel information of the SFPF #1 and notifies the SFPF #2 of the forwarding channel information. Similarly, the SFCC obtains the forwarding channel information of the SFPF #2 and notifies the SFPF #3 of the forwarding channel information.

Manner 2: After the SFCC determines M SFPFs and a corresponding sequence, the SFCC allocates or determines forwarding channel information corresponding to each SFPF, and notifies each SFPF of the forwarding channel information.

S304: The SFCC sends the association information #1 to the SFPF #1, sends the association information #2 to the SFPF #2, and sends the association information #3 to the SFPF #3.

Correspondingly, the SFPF #1 receives the association information #1, the SFPF #2 receives the association information #2, and the SFPF #3 receives the association information #3.

In a specific implementation, information included in one piece of association information may be sent to the SFPF by using one piece of information or a plurality of pieces of information. For example, the SFCC first sends service chain establishment request information to the SFPF, where the service chain request information includes information about the SF performed by the SFPF. After the SFCC obtains indication information (the forwarding channel information of the SFPF), the SFCC sends service chain update request information to the SFPF, where the update request information includes the indication information.

S305: The SFPF #1 processes the task based on the association information #1, the SFPF #2 processes the task based on the association information #2, and the SFPF #3 processes the task based on the association information #3.

In conclusion, the SF that needs to be performed by each SFPF on the task and the processing sequence between the SFPFs are determined, and the pieces of association information are sent to the SFPF. Each SFPF may process the task based on the pieces of association information. In this way, this application supports processing of the task that requires the plurality of service functions.

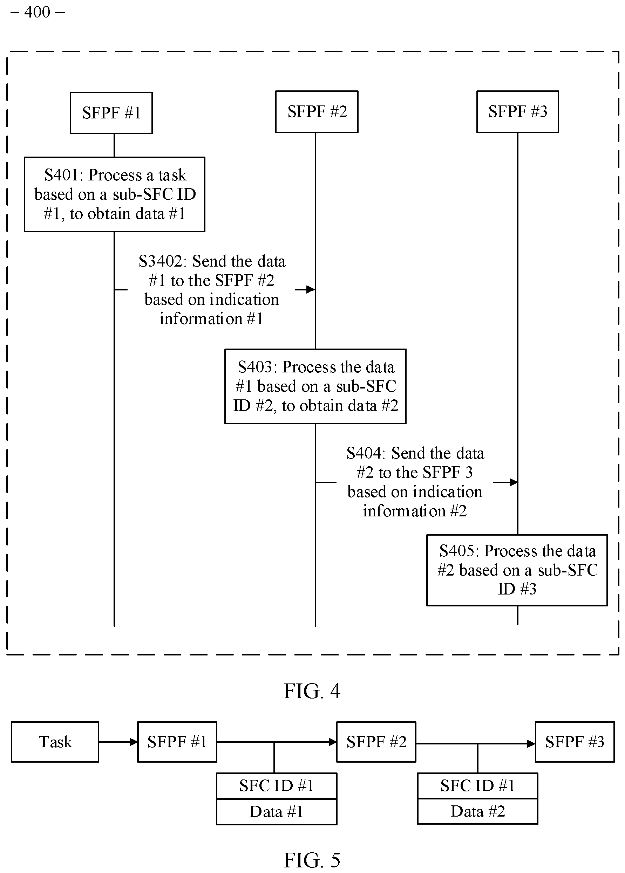

The following further describes the method in FIG. 3 with reference to FIG. 4.

FIG. 4 is a diagram of an interaction procedure of a task processing method 400 according to an embodiment of this application. The method shown in FIG. 4 may be performed by the SFPF #1, the SFPF #2, and the SFPF #3, or may be performed by a module, a chip, or the like configured to perform functions of the SFPF #1, the SFPF #2, and the SFPF #3. This is not limited herein. For ease of description, the following uses the SFPF #1, the SFPF #2, and the SFPF #3 as an example for description. The method 400 includes the following steps.

S401: The SFPF #1 processes the task based on the sub-SFC ID #1, to obtain the data#1.

The SFPF #1 first identifies the task from the network device 120. To be specific, the SFPF #1 may identify the task based on a specific field in a header of the task data, or based on a technology like AI, or based on specific identification information carried in the task data. For example, the specific field or the specific identification information may be but is not limited to: an SFC ID, a UE identifier, an app identifier, a DNN identifier, a task identifier, or the like. The field or the identification information may be sent by the SFCC to the terminal device 110 before step S401. For ease of description, the following uses an example in which the task includes the SFD ID #1 for description.

Specifically, the SFPF #1 processes the task data based on the service function list #1 in the association information #1.in other words, the SFPF #1 (if the SFPF #1 exists, based on the sub-SFC ID #1) processes the task data based on the SF #101 and the SF #102, to obtain the data#1.

S402: The SFPF #1 sends the data#1 to the SFPF #2 based on the indication information#1.

The indication information #1 indicates the SFPF #1 to send the data #1 to the SFPF #2, and may be specifically GTP-U TEID information of the SFPF #2, IPv6 address information of the SFPF #2, and/or the like.

In a possible implementation, the SFPF #1 encapsulates the data #1 with forwarding channel information (for example, the GTP-U TEID information of the SFPF #2) of the SFPF #2, and then sends the data #1 to the SFPF #2. Correspondingly, the SFPF #2 receives the data #1 from the forwarding channel, determines, based on Table 4, specific processing that needs to be performed by the SFPF #2 on the task, that is, determines the corresponding sub-SFC ID #2. In another possible implementation, the SFPF #1 encapsulates the data #1 with the SFC ID #1 of the task, and then sends the encapsulated data #1 to the SFPF #2. Correspondingly, the SFPF #2 determines the sub-SFC ID #2 based on the SFC ID #1 of the task and Table 4.

S403: The SFPF #2 processes the data #1 based on the sub-SFC ID #2, to obtain the data #2.

The SFPF #2 determines the SF #201 and the SF #202 based on the sub-SFC ID #2, and performs the SF #201 and the SF #202, to obtain the data #2.

It should be noted that the data #1 and the data #2 may be the same or may be different.

S404: The SFPF #2 sends the data #2 to the SFPF #3 based on the indication information #2.

A function of the indication information #2 is the same as that of the indication information #1, and details are not described again.

In a possible implementation, the SFPF #2 encapsulates the data #2 with the forwarding channel information of the SFPF #3 (for example, GTP-U TEID information of the SFPF #3), and then sends the encapsulated data #2 to the SFPF #3. Correspondingly, the SFPF #3 receives the data #2 from a tunnel corresponding to the GTP-U TEID information, and determines the sub-SFC ID #3.

In another possible implementation, the SFPF #2 encapsulates the data #2 with the SFC ID #1 of the task, and then sends the encapsulated data #2 to the SFPF #3. Correspondingly, the SFPF #3 determines the sub-SFC ID #3 based on the SFC ID #1 of the task.

The indication information #1 may further include information indicating a corresponding SFPF to encapsulate data with an SFC ID or a sub-SFC ID. For example, the indication information #1 further indicates the SFPF #1 to encapsulate the data #1 with the SFC ID #1, or indicates the SFPF #1 to encapsulate the data #1 with the sub-SFC ID #2 and the sub-SFC ID #3.

In addition, when a plurality of SFPFs jointly process the task, this embodiment of this application also supports the SFPFs not to encapsulate data, and each SFPF may determine a corresponding sub-SFC ID and the like according to Table 4.

S405: The SFPF #3 processes the data #2 based on the sub-SFC ID #3.

The SFPF #3 determines the SF #301 and the SF #302 based on the sub-SFC ID #3, and performs the SF #301 and the SF #302.

In addition, the SFPF #3 determines, based on that the indication information is empty or based on that the data #2 is received from the tunnel corresponding to the specific GTP-U TEID information, that there is no subsequent SFPF for processing, and no additional encapsulation is performed.

In conclusion, this application supports joint processing performed by the plurality of SFPFs on the task.

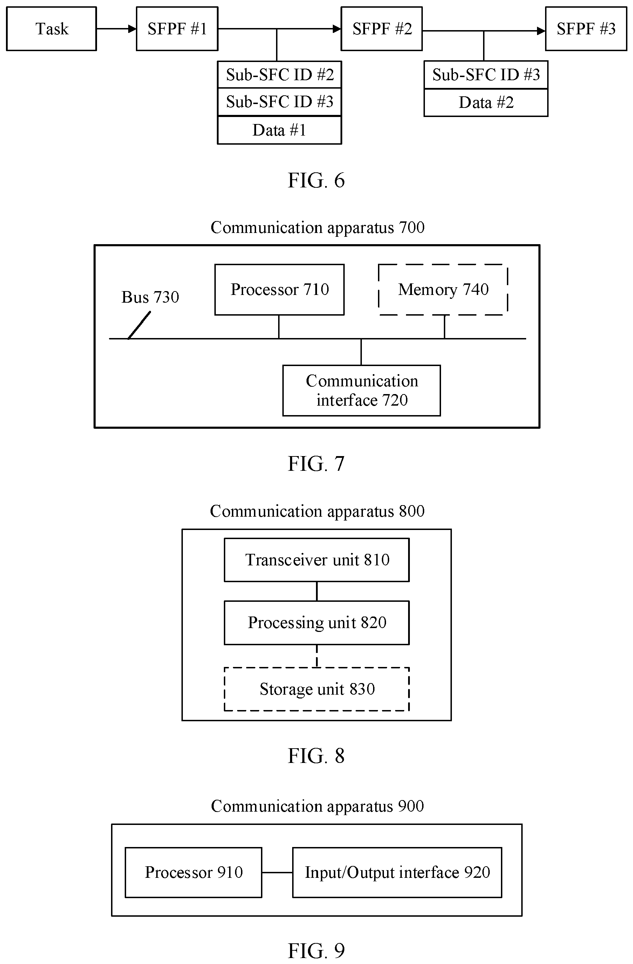

The following further describes the solution shown in FIG. 4 with reference to FIG. 5 and FIG. 6.

FIG. 5 is a diagram of data transmission according to an embodiment of this application. As shown in FIG. 5, after the SFPF #1 receives the task data, the SFPF #1 determines, based on the SFC ID #1 carried in the task, the association information #1 associated with the SFC ID #1, and performs the SF #101 and the SF #102 on the task based on the sub-SFC ID #1 in the association information #1, to obtain the data #1. Further, the SFPF #1 may encapsulate the data #1 with the SFC ID #1, and determine, based on the indication information #1, that the encapsulated data #1 needs to be sent to the SFPF #2. The SFPF #2 decapsulates the received data, parses the SFC ID #1, determines, based on the SFC ID #1, the association information #2 associated with the SFC ID #1, and processes the data #1 based on the service function list #2 corresponding to the sub-SFC ID #2 in the association information #2, to obtain the data #2. Further, the SFPF #2 may encapsulate the data #2 with the SFC ID #1, and determine, based on the indication information #2, that the encapsulated data #2 needs to be sent to the SFPF #3. The SFPF #3 determines, based on the SFC ID #1, the association information #3 associated with the SFC ID #1, and processes the data #2 based on the service function list #3 corresponding to the sub-SFC ID #3 in the association information #3, to complete processing of the task. Further, the SFPF #3 may determine, based on that the indication information is empty, that the SFPF #3 is the last service network element.

It should be noted that the data #1 may identify data obtained by performing the SF #101 and the SF #102 by the SFPF #1 on the task data, or may be used to identify data encapsulated based on the indication information #1 after the SF #101 and the SF #102 are performed on the task data. This is not limited.

FIG. 6 is another diagram of data transmission according to an embodiment of this application. As shown in FIG. 6, after the SFPF #1 receives the task data, the SFPF #1 determines, based on the SFC ID #1 carried in the task, the association information #1, the association information #2, and the association information #3 that are associated with the SFC ID #1, and performs the SF #101 and the SF #102 on the task based on the sub-SFC ID #1 in the association information #1, to obtain the data #1. Further, the SFPF #1 may encapsulate the data #1 with the sub-SFC ID #2 and the sub-SFC ID #3, and determine, based on the indication information #1, that the encapsulated data #1 needs to be sent to the SFPF #2. The SFPF #2 performs the SF #201 and the SF #202 on the data #1 based on the sub-SFC ID #2, to obtain the data #2. Further, the SFPF #2 determines, based on the indication information #2, that the data #2 (including the sub-SFC ID #3) needs to be sent to the SFPF #3. The SFPF #3 performs the SF #301 and the SF #302 on the data #2 based on the sub-SFC ID #3, to complete processing of the task. Further, the SFPF #3 may determine, based on that the indication information is empty, that the SFPF #3 is the last service network element.

With reference to the descriptions of FIG. 2 to FIG. 6, in this embodiment of this application, the SFCC determines the SF that is performed by each of the plurality of SFPFs on the task, may determine the processing sequence of each of the plurality of SFPFs on the task, and sends the foregoing pieces of information to the plurality of SFPFs. The plurality of SFPFs jointly process the task based on the foregoing pieces of information. In this way, this application supports processing of the task that requires the plurality of service functions.

Finally, an apparatus embodiment in embodiments of this application is described.

To implement functions in the method provided in this application, both the control network element and the service network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 7 is a block diagram of a communication apparatus 700 according to an embodiment of this application. The communication apparatus 700 includes a processor 710 and a communication interface 720. The processor 710 and the communication interface 720 may be connected to each other through a bus 730. The communication apparatus 700 may be a control network element, or may be a service network element.

Optionally, the communication apparatus 700 may further include a memory 740. The memory 740 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 740 is used for related instructions and data.

The processor 710 may be one or more central processing units (central processing unit, CPU). When the processor 710 is one CPU, the CPU may be a single-core CPU or a multi-core CPU.

When the communication apparatus 700 is the control network element, for example, the processor 710 is configured to perform the following operations: determining M pieces of association information associated with one task, where an I^{th} piece of association information in the M pieces of association information includes an I^{th} service function list and an I^{th} piece of indication information, and an M^{th} piece of association information in the M pieces of association information includes an M^{th} service function list, where M is greater than or equal to 2; and the processor 710 is further configured to send the M pieces of association information, and the like.

When the communication apparatus 700 is the service network element, for example, the processor 710 is configured to perform the following operations: receiving association information; processing the task based on the association information; and the like.

The content is merely used as an example for description. When the communication apparatus 700 is the control network element/service network element, the communication apparatus 700 is responsible for performing the method or the step related to the control network element/service network element in the foregoing method embodiments.

The foregoing descriptions are merely examples. For specific content, refer to content shown in the method embodiments. For implementation of the operations in FIG. 7, refer to corresponding descriptions in the method embodiments shown in FIG. 2 and FIG. 6.

FIG. 8 is a block diagram of a communication apparatus 800 according to an embodiment of this application. The communication apparatus 800 may be a control network element/service network element, or may be a chip or a module in a control network element/service network element, and is configured to implement the methods in the foregoing embodiments. The communication apparatus 800 includes a transceiver unit 810 and a processing unit 820. The following describes the transceiver unit 810 and the processing unit 820 by using examples.

The transceiver unit 810 may include a sending unit and a receiving unit. The sending unit is configured to perform a sending action of the communication apparatus, and the receiving unit is configured to perform a receiving action of the communication apparatus. For ease of description, in embodiment of this application, the sending unit and the receiving unit are combined into one transceiver unit. This is described herein once for all, and details are not described below again.

When the communication apparatus 800 is the control network element, for example, the transceiver unit 810 is configured to send M pieces of association information and the like. The processing unit 820 is configured to determine M pieces of association information associated with one task and the like.

When the communication apparatus 800 is a service network element, for example, the transceiver unit 810 is configured to receive association information, and the processing unit 820 is configured to process the task based on the association information and the like.

The content is merely used as an example for description. When the communication apparatus 800 is the control network element/service network element, the communication apparatus 800 is responsible for performing the method or the step related to the control network element/service network element in the foregoing method embodiments.

Optionally, the communication apparatus 800 further includes a storage unit 830, and the storage unit 830 is configured to store a program or code used for performing the foregoing method.

The apparatus embodiments shown in FIG. 7 and FIG. 8 are used to implement the content described in FIG. 2 to FIG. 6. For specific execution steps and methods of the apparatuses shown in FIG. 7 and FIG. 8, refer to the content described in the foregoing method embodiments.

FIG. 9 is a block diagram of a communication apparatus 900 according to an embodiment of this application. The communication apparatus 900 is configured to implement a function of a control network element/service network element. The communication apparatus 900 may be a chip in the control network element/service network element.

The communication apparatus 900 includes an input/output interface 920 and a processor 910. The input/output interface 920 may be an input/output circuit. The processor 910 may be a signal processor, a chip, or another integrated circuit that can implement the method in this application. The input/output interface 920 is configured to input or output a signal or data.

For example, when the communication apparatus 900 is the control network element, the input/output interface 920 is configured to send M pieces of association information. The processor 910 is configured to determine M pieces of association information associated with one task, and the like. The processor 910 is further configured to perform some or all steps of any method provided in this application.

For example, the communication apparatus 900 is the service network element, and the input/output interface 920 is configured to receive association information. The processor 910 is configured to process the task based on the association information, and the like.

In a possible implementation, the processor 910 executes instructions stored in a memory, to implement a function implemented by the network device or the terminal device.

Optionally, the communication apparatus 900 further includes the memory.

Optionally, the processor and the memory are integrated together.

Optionally, the memory is outside the communication apparatus 900.

In a possible implementation, the processor 910 may be a logic circuit, and the processor 910 inputs/outputs information or signaling through the input/output interface 920. The logic circuit may be a signal processor, a chip, or another integrated circuit that can implement the method in embodiments of this application.

The foregoing descriptions of the communication apparatus 900 are merely an example for description. The communication apparatus 900 can be configured to perform the method in the foregoing embodiments. For specific content, refer to the descriptions of the foregoing method embodiment. Details are not described herein again.

This application further provides a chip, including a processor. The processor is configured to invoke, from a memory, instructions stored in the memory and run the instructions, to enable a communication device on which the chip is installed to perform the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatuses, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A task processing method, comprising:
determining M pieces of association information associated with one task, wherein the M pieces of association information are associated with N service network elements, one piece of association information in the M pieces of association information is associated with one service network element in the N service network elements, an I^{th} piece of association information in the M pieces of association information comprises an I^{th} service function list and an I^{th} piece of indication information, the I^{th} service function list comprises at least one service function provided by a service network element associated with the I^{th} piece of association information for the task, the I^{th} piece of indication information indicates the service network element associated with the I^{th} piece of association information to send data to a service network element associated with an (I+1)^{th} piece of association information, the data is obtained by processing, based on the I^{th} service function list, the task by the service network element associated with the I^{th} piece of association information, an M^{th} piece of association information in the M pieces of association information comprises an M^{th} service function list, the M^{th} service function list comprises at least one service function provided by a service network element associated with the M^{th} piece of association information in the N service network elements for the task, M is a positive integer greater than 1, I is a positive integer less than M, and N is a positive integer equal to or less than M; and
sending the M pieces of association information to the N service network elements.

2. The method according to claim 1, wherein the determining the M pieces of association information associated with the one task comprises:
determining task information and M pieces of service information, wherein the M pieces of service information are associated with the N service network elements, one piece of service information in the M pieces of service information is associated with one service network element in the N service network elements, the one piece of service information in the M pieces of service information indicates at least one service function supported by the associated service network element in the N service network elements, the task information indicates at least two service functions required by the task, and at least one service function comprised in a service function list comprised in each of the M pieces of association information belongs to the at least two service functions; and
determining the M pieces of association information based on the task information and the M pieces of service information.

3. The method according to claim 2, wherein the determining the M pieces of service information comprises:
receiving M pieces of registration information, wherein the M pieces of registration information are associated with the N service network elements, one piece of service information in the M pieces of registration information is associated with one service network element in the N service network elements, and one piece of registration information in the M pieces of registration information comprises the service information associated with the service network element in the N service network elements.

4. The method according to claim 2, wherein the determining the M pieces of service information comprises:
sending query information, wherein the query information is used to request to query the M pieces of service information; and
receiving response information, wherein the response information comprises the M pieces of service information.

5. The method according to any one of claims 2 to 4, wherein the determining the task information comprises:
receiving request information, wherein the request information is used to request to process the task, and the request information comprises the task information.

6. The method according to any one of claims 1 to 6, wherein the service function list comprised in each of the M pieces of association information is a service identifier, and the service identifier is associated with the at least one service function comprised in the corresponding service function list.

7. The method according to claim 6, wherein each of the M pieces of association information comprises a service chain identifier of the task, the service chain identifier of the task is associated with M service function lists, and the M service function lists are in a one-to-one correspondence with the M pieces of association information.

8. The method according to any one of claims 1 to 7, wherein the I^{th} piece of indication information is indication information of the service network element associated with the (I+1)^{th} piece of association information, and the indication information of the service network element associated with the (I+1)^{th} piece of association information comprises tunnel information of the service network element associated with the (I+1)^{th} piece of association information.

9. A task processing method, comprising:
receiving association information, wherein the association information comprises a first service function list and indication information, the first service function list comprises at least one service function provided by a first service network element for a task, the indication information indicates the first service network element to send data to a second service network element, and the data is obtained by processing the task by the first service network element based on the first service function list; and
processing the task based on the association information.

10. The method according to claim 9, wherein the processing the task based on the association information comprises:
processing the task based on the first service function list, to obtain the data; and
sending the data to the second service network element based on the indication information.

11. The method according to claim 9, wherein the processing the task based on the association information comprises:
processing the task based on the first service function list, to obtain the data; and
sending a service chain identifier of the task and the data to the second service network element based on the indication information, wherein the service chain identifier of the task is associated with a second service function list, the second service function list comprises at least one service function provided by the second service network element for the task, and the association information further comprises the service chain identifier of the task.

12. The method according to any one of claims 9 to 11, wherein the association information is determined based on task information and M pieces of service information, the M pieces of service information are associated with N service network elements, one piece of service information in the M pieces of service information is associated with one service network element in the N service network elements, the one piece of service information in the M pieces of service information indicates at least one service function supported by the associated service network element in the N service network elements, the task information indicates at least two service functions required by the task, the at least one service function comprised in the first service function list belongs to the at least two service functions, and the N service network elements comprise the first service network element and the second service network element.

13. The method according to any one of claims 9 to 12, wherein the first service function list is a service identifier, and the service identifier is associated with the at least one service function comprised in the first service function list.

14. The method according to any one of claims 9 to 13, wherein the indication information is indication information of the second service network element, and the indication information of the second service network element comprises tunnel information of the second service network element.

15. A communication system, comprising a control network element and N service network elements, wherein
the control network element is configured to determine M pieces of association information associated with one task, wherein the M pieces of association information are associated with the N service network elements, one piece of association information in the M pieces of association information is associated with one service network element in the N service network elements, an I^{th} piece of association information in the M pieces of association information comprises an I^{th} service function list and an I^{th} piece of indication information, the I^{th} service function list comprises at least one service function provided by a service network element associated with the I^{th} piece of association information for the task, the I^{th} piece of indication information indicates the service network element associated with the I^{th} piece of association information to send data to a service network element associated with an (I+1)^{th} piece of association information, the data is obtained by processing, based on the I^{th} service function list, the task by the service network element associated with the I^{th} piece of association information, an M^{th} piece of association information in the M pieces of association information comprises an M^{th} service function list, the M^{th} service function list comprises at least one service function provided by a service network element associated with the M^{th} piece of association information in the N service network elements for the task, M is a positive integer greater than 1, I is a positive integer less than M, and N is a positive integer equal to or less than M;
the control network element is configured to send the M pieces of association information to the N service network elements;
an I^{th} service network element in the N service network elements is configured to receive association information that is in the M pieces of association information and that is associated with the I^{th} service network element; and
the I^{th} service network element is configured to process the task based on the association information that is in the M pieces of association information and that is associated with the I^{th} service network element.

16. The system according to claim 15, wherein the I^{th} service network element is further configured to:
process the task based on a service function list in the association information that is in the M pieces of association information and that is associated with the I^{th} service network element, to obtain the data; and
send the data to an (I+1)^{th} service network element based on indication information in the association information that is in the M pieces of association information and that is associated with the I^{th} service network element.

17. The system according to claim 15, wherein the I^{th} service network element is further configured to:
process the task based on a service function list in the association information that is in the M pieces of association information and that is associated with the I^{th} service network element, to obtain the data; and
send a service chain identifier of the task and the data to an (I+1)^{th} service network element based on indication information in the association information that is in the M pieces of association information and that is associated with the I^{th} service network element, wherein the service chain identifier of the task is associated with a service function list associated with the (I+1)^{th} service network element, and the association information that is in the M pieces of association information and that is associated with the I^{th} service network element further comprises the service chain identifier of the task.

18. The system according to any one of claims 15 to 17, wherein the service function list in the association information that is in the M pieces of association information and that is associated with the I^{th} service network element is a service identifier, and the service identifier is associated with at least one service function comprised in the service function list in the association information that is in the M pieces of association information and that is associated with the I^{th} service network element.

19. The system according to any one of claims 15 to 18, wherein the control network element is further configured to:
determine task information and M pieces of service information, wherein the M pieces of service information are associated with the N service network elements, one piece of service information in the M pieces of service information is associated with one service network element in the N service network elements, the one piece of service information in the M pieces of service information indicates at least one service function supported by the associated service network element in the N service network elements, the task information indicates at least two service functions required by the task, and at least one service function comprised in a service function list comprised in each of the M pieces of association information belongs to the at least two service functions; and
determine the M pieces of association information based on the task information and the M pieces of service information.

20. The system according to claim 19, wherein the control network element is further configured to:
receive M pieces of registration information, wherein the M pieces of registration information are associated with the N service network elements, one piece of service information in the M pieces of registration information is associated with one service network element in the N service network elements, and one piece of registration information in the M pieces of registration information comprises the service information associated with the service network element in the N service network elements.

21. The system according to claim 19, wherein the control network element is further configured to:
send query information, wherein the query information is used to request to query the M pieces of service information; and
receive response information, wherein the response information comprises the M pieces of service information.

22. The system according to any one of claims 19 to 21, wherein the control network element is further configured to:
receive request information, wherein the request information is used to request to process the task, and the request information comprises the task information.

23. The system according to any one of claims 15 to 22, wherein the I^{th} piece of indication information is indication information of the service network element associated with the (I+1)^{th} piece of association information, and the indication information of the service network element associated with the (I+1)^{th} piece of association information comprises tunnel information of the service network element associated with the (I+1)^{th} piece of association information.

24. A communication apparatus, comprising a processor, wherein the processor is configured to: by executing a computer program or instructions or through a logic circuit,
enable the communication apparatus to perform the method according to any one of claims 1 to 8, or
enable the communication apparatus to perform the method according to any one of claims 9 to 14.

25. The communication apparatus according to claim 24, wherein the communication apparatus further comprises a memory, and the memory is configured to store the computer program or the instructions.

26. The communication apparatus according to claim 24 or 25, wherein the communication apparatus further comprises a communication interface, and the communication interface is configured to input and/or output a signal.

27. A communication apparatus, comprising a logic circuit and an input/output interface, wherein the input/output interface is configured to input and/or output a signal; and
the logic circuit is configured to perform the method according to any one of claims 1 to 8; or
the logic circuit is configured to perform the method according to any one of claims 9 to 14.

28. A computer-readable storage medium, wherein the computer-readable storage medium stores a computer program or instructions, and when the computer program or the instructions are run on a computer,
the method according to any one of claims 1 to 8 is performed; or
the method according to any one of claims 9 to 14 is performed.

29. A computer program product, comprising instructions, wherein when the instructions are run on a computer,
the method according to any one of claims 1 to 8 is performed; or
the method according to any one of claims 9 to 14 is performed.
